# EUROPEAN PATENT SPECIFICATION

(11) **EP 3 203 207 B1**
(45) Date of publication and mention of the grant of the patent: **09.10.2019**
(21) Application number: 15848041.8
(22) Date of filing: 31.08.2015
(51) Int. Cl.: G01M 13/04

(54) **RUNOUT MEASUREMENT DEVICE**
RUNDLAUFMESSVORRICHTUNG
DISPOSITIF DE MESURE DE BATTEMENT

(30) Priority: 29.09.2014 JP 2014198854
(43) Date of publication of application: 09.08.2017
(73) Proprietor: NTN Corporation, Osaka-shi, Osaka 550-0003 (JP)
(72) Inventor: SAKAKIBARA Yasuhiko, Iwata-shi Shizuoka 438-8510 (JP)
(74) Representative: Grünecker Patent- und Rechtsanwälte PartG mbB
(86) International application number: PCT/JP2015/074564
(87) International publication number: WO 2016/052039

(56) References cited:
- DE-A1-102010 022 892
- JP-A- S5 760 244
- JP-A- S5 760 244
- JP-A- H04 161 830
- JP-A- H04 161 830
- JP-A- 2008 014 794
- JP-B1- S4 948 153
- JP-B1- S4 948 153
- Anonymous: "A-35 Bearing Tolerances", , 27 February 2009 (2009-02-27), XP055462425, Retrieved from the Internet: URL:http://old.ycbearing.com/product/177/0 6_Bearing%20Tolerances.pdf [retrieved on 2018-03-23]

## Description

### Technical Field

The present invention relates to a runout measurement device, and more particularly, to a runout measurement device for a rolling bearing.

### Background Art

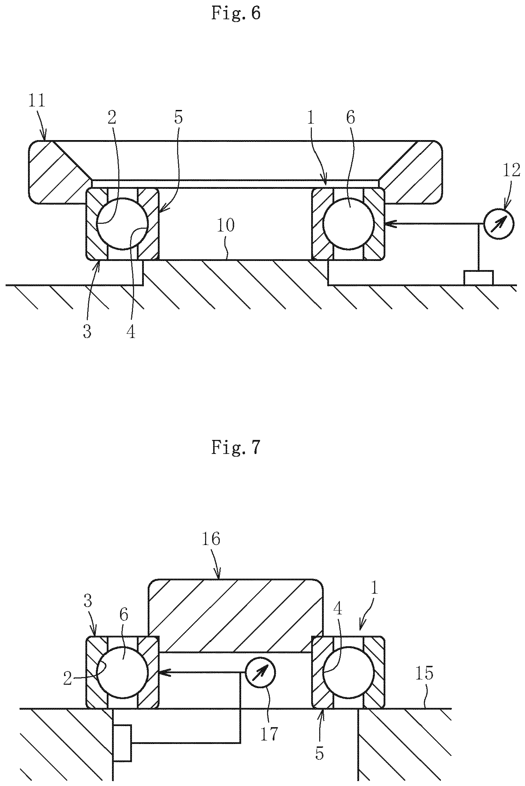

Methods of measuring a radial runout and an axial runout of a rolling bearing are defined in JIS (JIS B 1515). The radial runout of an outer ring is measured by a method illustrated in FIG. 6, and the radial runout of an inner ring is measured by a method illustrated in FIG. 7. As illustrated in FIG. 6 and FIG. 7, a rolling bearing 1 includes an outer ring 3 having an outer ring raceway surface 2 formed on a radially inner surface of the outer ring 3, an inner ring 5 having an inner ring raceway surface 4 formed on a radially outer surface of the inner ring 5, and balls 6 interposed between the outer ring raceway surface 2 and the inner ring raceway surface 4.

In a radial runout measurement device for the outer ring illustrated in FIG. 6, the inner ring 5 of the rolling bearing is fixed to a reference plane 10, and the outer ring 3 is rotated while applying a load to the outer ring 3 by a weight member 11. Then, a runout of an outer diameter of the outer ring 3 (outer ring radial runout) is measured by a radial runout measuring device 12. In this case, a runout of an end surface of the outer ring 3 (outer ring axial runout) can be measured by an axial runout measuring device (not shown).

In a radial runout measurement device for the inner ring illustrated in FIG. 7, the outer ring 3 of the rolling bearing is fixed to a reference plane 15, and the inner ring 5 is rotated while applying a load to the inner ring 5 by a weight member 16. Then, a runout of an inner diameter of the inner ring 5 (inner ring radial runout) is measured by a radial runout measuring device 17. In this case, a runout of an end surface of the inner ring 5 (inner ring axial runout) can be measured by an axial runout measuring device (not shown).

Hitherto, there have been proposed various devices as devices that use the methods defined in JIS (JIS B 1515) as described above (Patent Literature 1 and Patent Literature 2).

### Citation List

Patent Literature 1: JP 55-39010 A
Patent Literature 2: JP 49-48153
Patent Literature 3: JP S57 60244 A
Patent Literature 4: JP H04 161830 A
Patent Literature 5: DE 10 2010 022892 A1
Non-Patent Literature 6: "A-35 Bearing Tolerances", 27 February 2009, URL: http://old.ycbearing.com/product/177/06_Bearing%20Tolerances.pdf

### Summary of Invention

### Technical Problem

Incidentally, it is difficult to completely eliminate a runout in a bearing. However, when the maximum phase of the runout is known, the influence of the runout can be cancelled out to some extent by mounting a balance weight on the opposite side of the runout maximum phase at the time of assembly of the bearing to various devices.

Therefore, when the runout of the bearing is to be measured, it is preferred to measure not only the magnitude of the runout but also the runout maximum phase. However, in the methods defined in JIS (JIS B 1515) and the related-art methods using those methods, a method capable of measuring the maximum phase of the runout is not proposed.

When an indication value of a displacement sensor, for example, an electric micrometer or a dial gauge, which is the measuring device, is visually observed, and the position at which the maximum runout is obtained is recorded, the maximum phase of the runout can be measured.

However, in this case, in the indication value of the displacement sensor, a runout component that is synchronized with the rotation (RRO) and a vibration component that is not synchronized with the rotation (NRRO) appear in a mixed manner. When the NRRO is larger than the RRO, it is difficult to separate only the RRO with the measurement through visual observation. Further, what can be suppressed through mounting of the balance weight is a certain-angle component (uneven-thickness component) of the RRO, and it is difficult to extract only a certain-angle component from the RRO through visual observation to specify the maximum position. That is, the measurement values of the runout maximum position may fluctuate.

The present invention provides, in view of the above-mentioned problems, a runout measurement device capable of accurately obtaining a runout maximum phase that is synchronized with rotation, which is required for mounting a balance weight.

### Solution to Problem

According to a first aspect of the present invention, there is provided a runout measurement device for a rolling bearing, the runout measurement device comprising: a fixing stage to which an inner ring of a rolling bearing to be measured is fixed; a weight member configured to apply a measuring load to an outer ring of the rolling bearing; a runout amount detector configured to detect a runout amount of the outer ring; a phase detector configured to detect phase information of the outer ring; and an analyzer configured to import a displacement signal, which is synchronized with a rotation phase based on the phase information of the phase detector, in the runout amount corresponding to displacement data detected by the runout amount detector, to thereby calculate a magnitude and a maximum phase of a runout of the outer ring.

According to the runout measurement device of the first aspect of the present invention, under a state in which the inner ring of the rolling bearing is fixed to the fixing stage, the measuring load is applied to the outer ring of the bearing by the weight member, and the outer ring is rotated under this state. In this manner, the runout amount detector can detect the runout amount of the outer ring. Further, the phase detector can detect the phase information of the outer ring. Further, the analyzer can remove the vibration component that is not synchronized with the rotation, and calculate the magnitude and the maximum phase of the runout of the outer ring based on the signal data obtained after the removal of the vibration component.

According to a second aspect of the present invention, there is provided a runout measurement device for a rolling bearing, the runout measurement device comprising: a fixing stage to which an outer ring of a rolling bearing to be measured is fixed; a weight member configured to apply a measuring load to an inner ring of the rolling bearing; a runout amount detector configured to detect a runout amount of the inner ring; a phase detector configured to detect phase information of the inner ring; and an analyzer configured to import a displacement signal, which is synchronized with a rotation phase based on the phase information of the phase detector, in the runout amount corresponding to displacement data detected by the runout amount detector, to thereby calculate a magnitude and a maximum phase of a runout of the inner ring.

According to the runout measurement device of the second aspect of the present invention, under a state in which the outer ring of the rolling bearing is fixed to the fixing stage, the measuring load is applied to the inner ring of the bearing by the weight member, and the inner ring is rotated under this state. In this manner, the runout amount detector can detect the runout amount of the inner ring. Further, the phase detector placed along the weight member can detect the phase information of the inner ring. Further, the analyzer can remove the vibration component that is not synchronized with the rotation, and calculate the magnitude and the maximum phase of the runout of the inner ring based on the signal data obtained after the removal of the vibration component.

The analyzer comprises a removing unit configured to remove a vibration component that is not synchronized with rotation, and the removing unit comprises a drift correction processing unit. With this, the vibration component that is not synchronized with the rotation can be removed.

The drift correction processing unit can remove a drift component by calculating a first-order approximation line of data by a least squares method and subtracting the first-order approximation line from the original data. Further, the drift correction processing unit can remove a drift component by calculating a straight line connecting a head and a tail of data and subtracting the straight line from the original data.

The removing unit of the analyzer may comprise a phase-compensation low-pass filter. In this case, the low-pass filter (LPF) refers to one type of a filter that is configured to hardly attenuate, in some kind of signal, components having frequencies that are lower than a cutoff frequency, but diminish components having frequencies that are higher than the cutoff frequency. Therefore, the non-synchronous vibration component can be removed.

A Gaussian filter can be used as the phase-compensation low-pass filter. In this case, the Gaussian filter refers to a filter configured to calculate a rate with use of a function of a Gaussian distribution such that a weight at the time of calculation of an average value is increased as approaching to data of interest, and the weight is decreased as separating from the data of interest.

It is preferred that the analyzer comprise a harmonic analysis unit, which is configured to perform harmonic analysis with respect to signal data obtained after removal of the vibration component that is not synchronized with the rotation, to thereby quantify an obtained first-order component phase as the maximum phase of the bearing runout.

The phase detector may comprise a slit formed in the weight member as positional information, and a photoelectric sensor configuredto detect the silt. The photoelectric sensor may comprise a Z-phase detection photoelectric sensor and an A-phase detection photoelectric sensor, and the Z-phase detection photoelectric sensor and the A-phase detection photoelectric sensor may be combined to construct a rotary encoder for phase detection.

### Advantageous Effects of Invention

According to the present invention, the runout amount detector can detect the runout amount, that is, the magnitude of the runout, and the analyzer can calculate the maximum phase of the runout. With this, the balance weight can be stably mounted on the opposite side of the runout maximum phase, and thus the bearing capable of achieving stable rotation can be provided.

### Brief Description of Drawings

FIG. 1 is a simplified view of a runout measurement device according to a first aspect of the present invention.
FIG. 2 is a simplified block diagram of an analyzer of the runout measurement device.
FIG. 3 is a simplified view of a runout measurement device according to a second aspect of the present invention.
FIG. 4 is a simplified view of a runout measurement device according to a third aspect of the present invention.
FIG. 5 is a simplified view of a runout measurement device according to a fourth aspect of the present invention.
FIG. 6 is a simplified view for illustrating a state of measuring a radial runout of an outer ring by a method defined in JIS.
FIG. 7 is a simplified view for illustrating a state of measuring a radial runout of an inner ring by a method defined in JIS.

### Description of Embodiments

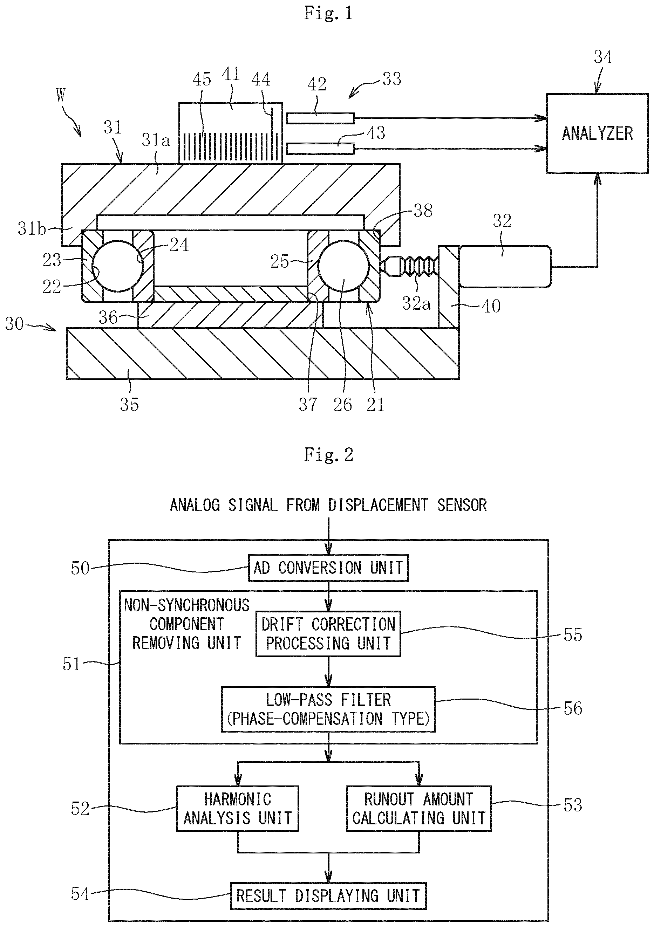

Now, embodiments of the present invention are described with reference to FIG. 1 to FIG. 5. FIG. 1 is an illustration of a runout measurement device configured to detect a magnitude and a maximum phase of a runout of an outer ring of a rolling bearing. Incidentally, a rolling bearing 21 comprises an outer ring 23 having an outer ring raceway surface 22 formed on a radially inner surface of the outer ring 23, an inner ring 25 having an inner ring raceway surface 24 formed on a radially outer surface of the inner ring 25, and balls 26 interposed between the outer ring raceway surface 22 and the inner ring raceway surface 24.

The runout measurement device comprises a fixing stage 30 to which the inner ring 25 of the rolling bearing 21 to be measured is fixed, a weight member W configured to apply a measuring load to the outer ring 23 of the bearing 21, a runout amount detector 32 configured to detect a runout amount of the outer ring 23, a phase detector 33 configured to detect phase information of the outer ring 23, and an analyzer 34 configured to calculate the maximum phase of the bearing runout based on the phase information detected by the phase detector 33.

The fixing stage 30 comprises a base (base stage) 35, and an inner ring fixing jig 36 arranged on the base 35. The inner ring fixing jig 36 is a disc-shaped member, and has an inner ring fitting portion 37 formed of a circumferential cutout at an outer peripheral part of an upper surface of the inner ring fixing jig 36. That is, when the inner ring 25 is fitted to the inner ring fitting portion 37, the inner ring 25 is fixed to the fixing stage 30.

The weight member W comprises a first member 31, and a second member 41 connected to the first member 31. The first member 31 comprises a disc-shaped main body portion 31a, and a ring portion 31b vertically suspended from an outer peripheral part of a lower surface of the main body portion 31a. The first member 31 has an outer ring fitting portion 38 formed of a circumferential cutout at a radially inner part of a lower portion of the ring portion 31b. That is, under a state in which the outer ring fitting portion 38 of the weight member W is fitted to the outer ring 23, the outer ring 23 and the weight member W are integrally rotated. In this case, the axial center of the inner ring fixing jig 36 of the fixing stage 30, the axial center of the bearing, and the axial center of the weight member W are arranged on the same vertical axial center. In JIS (JIS B 1515), the minimum value of the weight of the weight member is defined. The weight of the weight member W is set to have a value equal to or larger than the value defined in JIS . For example, the weight of the weight member W is set to 5 kg.

Further, the runout amount detector 32 comprises, for example, a contact displacement sensor, and is fixed to the base 35 of the fixing stage 30. That is, a support piece 40 is vertically arranged on the base 35, and the runout amount detector 32 is mounted to the support piece 40. Then, a contact rod 32a of the runout amount detector 32 is brought into contact with an outer surface of the outer ring 23. That is, a difference between the maximum value and the minimum value of values read by the measuring device (sensor) when the outer ring 23 is rotated one revolution can be used to detect (measure) the radial runout of the outer ring 23. The measurement data is input to the analyzer 34.

The phase detector 33 comprises a pair of photoelectric sensors 42 and 43. In the second member 41 of the weight member W, there are formed a Z-phase slit 44 as phase information, and A-phase slits 45 as phase information. In this case, only one Z-phase slit 44 is formed, and 180 A-phase slits 45 are formed at an equal pitch along the circumferential direction. Therefore, the first photoelectric sensor 42 is used for Z-phase detection, and the second photoelectric sensor 43 is used for A-phase detection. This phase detector 33 constructs a rotary encoder. The detection data of the phase detector 33 is input to the analyzer 34. The pair of photoelectric sensors 42 and 43 is not fixed to the weight member W, but is fixed to a fixing member (not shown) such that the first photoelectric sensor 42 faces the slit 44 at a predetermined interval and the second photoelectric sensor 43 faces the slits 45 at a predetermined interval.

As illustrated in FIG. 2, the analyzer 34 comprises an AD conversion unit 50, a non-synchronous component removing unit 51, a harmonic analysis unit 52, a runout amount calculating unit 53, and a result displaying unit 54. The AD conversion unit 50 is configured to convert the data transmitted from the sensor 32 into a digital value. Further, the non-synchronous component removing unit 51 comprises a drift correction processing unit 55 configured to remove the influence of temperature drift or the like, and a low-pass filter (phase-compensation type) 56 configured to remove the influence of a non-synchronous vibration component (NRRO) that is generated due to the rotation of the bearing 21. Further, the result displaying unit 54 can be constructed by a liquid crystal panel or the like.

In this case, the low-pass filter (LPF) refers to one type of a filter that is configured to hardly attenuate, in some kind of signal, components having frequencies that are lower than a cutoff frequency, but reduce components having frequencies that are higher than the cutoff frequency. Therefore, the non-synchronous vibration component can be removed.

Next, description is given of a method of detecting the magnitude and the maximum phase of the runout of the outer ring 23 of the bearing 21 by the runout measurement device illustrated in FIG. 1. First, as illustrated in FIG. 1, the bearing 21 is set on the fixing stage 30. That is, the inner ring 25 of the bearing 21 is fitted to the inner ring fitting portion 37 of the inner ring fixing jig 36, to thereby fix the inner ring 25 to the fixing stage 30.

After that, the weight member W is mounted to the outer ring 23. That is, the outer ring fitting portion 38 of the weight member W is fitted to the outer ring 23. Further, the contact rod 32a of the contact displacement sensor constructing the runout amount detector 32 is brought into contact with the outer peripheral surface of the outer ring 23.

Under this state, the outer ring 23 is rotated together with the weight member W. In this case, the outer ring 23 is rotated manually, that is, rotated by hands of an operator. Then, under a state in which an inertia rotation state is obtained after the rotation by hands, every time the A-phase detection photoelectric sensor 43 is turned on from the time point at which the Z-phase detection photoelectric sensor 42 is turned on, the runout amount detector 32 imports a displacement value of one revolution from the contact displacement sensor, for example.

Further, at a timing at which the A-phase detection photoelectric sensor 43 is turned on, first, the drift correction processing unit 55 removes the drift component of the displacement sensor performing measurement from the displacement data converted into a digital value by the AD conversion unit 50 of the analyzer 34. The drift correction may be performed by a method involving calculating a first-order approximation straight line by a least squares method with respect to the signal data of the displacement sensor, and subtracting the first-order approximation line from the original data. Alternatively, correction may be performed by obtaining a straight line connecting the head and the tail of the original data, and subtracting the straight line from the original data.

After that, the low-pass filter 56 removes the vibration component that is not synchronized with the rotation (NRRO). At this time, when a filter that does not compensate for a phase, for example, a CR filter, is used, there is a risk of a shift of the phase of the maximum position of the runout that is desired to be finally obtained. Therefore, a phase compensation filter is preferred to be used. As the phase compensation filter, for example, a Gaussian filter may be used. In this case, the Gaussian filter refers to a filter configured to calculate a rate with use of a function of a Gaussian distribution such that a weight at the time of calculation of an average value is increased as approaching to data of interest, and the weight is decreased as separating from the data of interest.

Next, the harmonic analysis unit 52 performs harmonic analysis (DFT) calculation, and the result displaying unit 54 displays the calculated first-order component phase as the maximum phase of the runout. Further, based on the data obtained by the runout amount detector, through employment of the method defined in JIS (JIS B 1515), the difference between the maximum value and the minimum value may be used to detect (measure) the radial runout of the outer ring 23. Then, the result displaying unit 54 may display the radial runout amount together with the maximum phase of the runout.

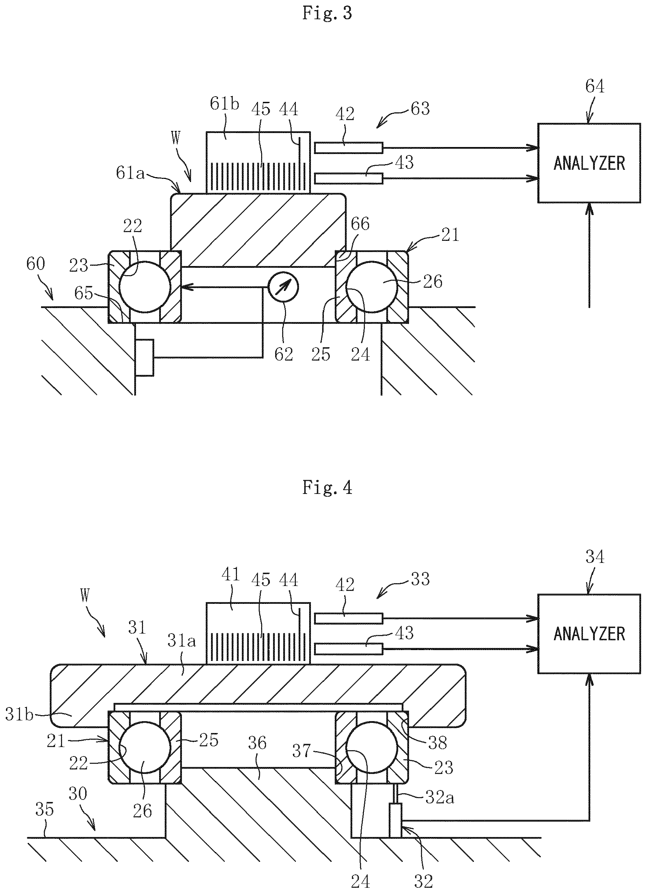

Next, FIG. 3 is an illustration of a runout measurement device configured to detect the radial runout of the inner ring. In this case, the runout measurement device comprises a fixing stage 60 to which the outer ring 23 of the rolling bearing 21 to be measured is fixed, a weight member W configured to apply a measuring load to the inner ring 24 of the bearing 21, a runout amount detector 62 configured to detect a runout amount of the inner ring 25, a phase detector 63 placed along the weight member W to detect the phase information, and an analyzer 64 configured to calculate the maximum phase of the bearing runout based on the phase information detected by the phase detector 63.

The fixing stage 60 is formed of a cylindrical member, and has an outer ring fitting portion 65 formed of a circumferential cutout portion formed at an upper opening part of the cylindrical member. Therefore, when the outer ring 23 is fitted to the outer ring fitting portion 65, the outer ring 23 can be fixed to the fixing stage 60. The weight member W comprises a first member 61a formed of a disc-shaped member, and a second member 61b arranged along the first member 61a. The weight member W has an inner ring fitting portion 66 formed of a circumferential cutout at an outer peripheral part of the lower surface of the first member 61. Therefore, when the weight member W is fitted to the inner ring 25, the weight member W can apply a measuring load to the inner ring 25. The weight of the weight member W is set to, for example, 5 kg.

As the runout amount detector 62, similarly to the runout amount detector 32 illustrated in FIG. 1, a contact displacement sensor comprising a contact rod is used, and the contact rod is brought into contact with a radially inner surface of the inner ring 25. Further, the phase detector 63 comprises, similarly to the phase detector 33 illustrated in FIG. 1, a pair of photoelectric sensors 42 and 43. Therefore, in the second member 61b of the weight member W, there are formed a Z-phase slit 44 as phase information, and A-phase slits 45 as phase information. The analyzer 64 also has a configuration similar to that of the analyzer 34 illustrated in FIG. 2.

Therefore, when the runout measurement device illustrated in FIG. 3 is used to measure the radial runout of the inner ring 25, first, the outer ring 23 is fixed to the fixing stage 60, and under a state in which the weight member W is mounted to the inner ring 25, the inner ring 25 is rotated manually and integrally with the weight member W. At this time, the contact rod of the contact displacement sensor of the runout amount detector 62 is brought into contact with the radially inner surface of the inner ring 25. Then, under a state in which an inertia rotation state is obtained after the rotation by hands, every time the A-phase detection photoelectric sensor 43 is turned on from the time point at which the Z-phase detection photoelectric sensor 42 is turned on, the runout amount detector 62 imports a displacement value of one revolution from the contact displacement sensor, for example.

After that, the analyzer 64 performs processing (calculation) similar to that of the analyzer 34 of the runout measurement device configured to detect the radial runout of the outer ring illustrated in FIG. 1. Thus, similarly to the runout measurement device configured to detect the radial runout of the outer ring illustrated in FIG. 1, the result displaying unit 54 can display the radial runout amount of the inner ring 25 together with the maximum phase of the runout.

FIG. 4 is an illustration of a runout measurement device configured to detect an axial runout of the outer ring. This case differs from the case illustrated in FIG. 1 in that the contact rod 32a of the runout amount detector 32 is brought into contact with an axial end surface of the outer ring 23. Other configurations are similar to those of the runout measurement device illustrated in FIG. 1. Like members are denoted by like reference symbols as the members illustrated in FIG. 1, and description thereof is omitted herein.

Therefore, when the runout measurement device illustrated in FIG. 4 is used to measure the axial runout of the outer ring 23, first, the inner ring 25 is fixed to the fixing stage 30, and under a state in which the weight member W is mounted to the outer ring 23, the outer ring 23 is rotated manually and integrally with the weight member W. At this time, the contact rod of the contact displacement sensor of the runout amount detector 32 is brought into contact with the axial end surface of the outer ring 23. Then, under a state in which an inertia rotation state is obtained after the rotation by hands, every time the A-phase detection photoelectric sensor 43 is turned on from the time point at which the Z-phase detection photoelectric sensor 42 is turned on, the runout amount detector 32 imports a displacement value of one revolution from the contact displacement sensor, for example.

After that, the analyzer 34 illustrated in FIG. 4 performs processing (calculation) similar to that of the analyzer 34 of the runout measurement device configured to detect the radial runout of the outer ring illustrated in FIG. 1. Thus, similarly to the runout measurement device configured to detect the radial runout of the outer ring illustrated in FIG. 1, the result displaying unit 54 can display the axial runout amount of the inner ring together with the maximum phase of the runout.

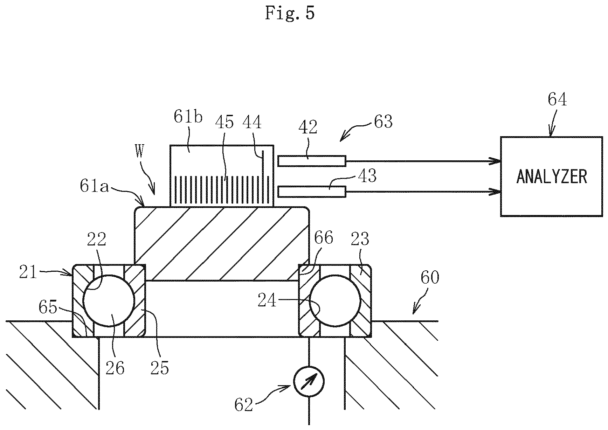

FIG. 5 is an illustration of a runout measurement device configured to detect an axial runout of the inner ring 25. This case differs from the case illustrated in FIG. 3 in that the contact rod 32a of the runout amount detector 32 is brought into contact with an axial end surface of the inner ring 25. Other configurations are similar to those of the runout measurement device illustrated in FIG. 3. Like members are denoted by like reference symbols as the members illustrated in FIG. 3, and description thereof is omitted herein.

Therefore, when the runout measurement device illustrated in FIG. 5 is used to measure the axial runout of the inner ring 25, first, the outer ring 23 is fixed to the fixing stage 60, and under a state in which the weight member W is mounted to the inner ring 25, the inner ring 25 is rotated manually and integrally with the weight member W. At this time, the contact rod of the contact displacement sensor of the runout amount detector 62 is brought into contact with the axially inner surface of the inner ring 25. Then, under a state in which an inertia rotation state is obtained after the rotation by hands, every time the A-phase detection photoelectric sensor 43 is turned on from the time point at which the Z-phase detection photoelectric sensor 42 is turned on, the runout amount detector 62 imports a displacement value of one revolution from the contact displacement sensor, for example.

After that, the analyzer 64 illustrated in FIG. 5 performs processing (calculation) similar to that of the analyzer 34 of the runout measurement device configured to detect the radial runout of the outer ring illustrated in FIG. 1. Thus, similarly to the runout measurement device configured to detect the axial runout of the outer ring illustrated in FIG. 1, the result displaying unit 54 can display the axial runout amount of the inner ring together with the maximum phase of the runout.

According to the present invention, the runout amount detector 32 (62) can detect the runout amount, that is, the magnitude of the runout, and the analyzer 34 (64) can calculate the maximum phase of the runout. With this, the balance weight can be stably mounted on the opposite side of the runout maximum phase, and thus the bearing capable of achieving stable rotation can be provided.

In the runout measurement device illustrated in FIG. 1, the runout maximum phase of the radial runout of the outer ring 23 can be detected with high accuracy. In the runout measurement device illustrated in FIG. 3, the runout maximum phase of the radial runout of the inner ring 25 can be detected with high accuracy. In the runout measurement device illustrated in FIG. 4, the runout maximum phase of the axial runout of the outer ring 23 can be detected with high accuracy. In the runout measurement device illustrated in FIG. 5, the runout maximum phase of the axial runout of the inner ring 25 can be detected with high accuracy.

The embodiments of the present invention have been described above. However, the present invention is not limited to the above-mentioned embodiments, and various modifications may be made thereto. As the phase detector 33 (63), a combination of the silts 44 and 45 and the photoelectric sensors 42 and 43 is used, but a magnetic encoder comprising a combination of a magnetic sensor and a magnetized portion formed on the second member 41 of the weight member W may be used. The contact displacement sensor is used as the runout amount detector 62, but a non-contact sensor using laser light, capacitance, or the like may be used.

### Industrial Applicability

The rolling bearing to be measured may be a ball bearing, a tapered roller bearing, or other rolling bearings. A rotational force may be applied to the inner ring or the outer ring of the bearing at the time of measurement manually or with use of a motor drive force.

### Reference Signs List

- 21: bearing
- 23: outer ring
- 25: inner ring
- 30: fixing stage
- 32: runout amount detector
- 33: phase detector
- 34: analyzer
- 42, 43: photoelectric sensor
- 51: non-synchronous component removing unit
- 52: harmonic analysis unit
- 55: drift correction processing unit
- 56: low-pass filter
- 60: fixing stage
- 62: runout amount detector
- 63: phase detector
- 64: analyzer
- W: weight member

## Claims

1. A runout measurement device for a rolling bearing (21), the runout measurement device comprising:
a fixing stage (30) to which an inner ring (25) of a rolling bearing (21) to be measured is fixed;
a weight member (W) configured to apply a measuring load in an axial direction to an outer ring (23) of the rolling bearing (21) ;
a runout amount detector (32) configured to detect a radial or axial runout amount of the outer ring (23);
wherein the measuring load is applied to the outer ring (23) of the bearing (21) by the weight member (W), the outer ring (23) is rotated together with the weight member (W) under this state, and the runout amount of the outer ring (23) is detected by the runout amount detector (32);
**characterized by:**
a phase detector (33) configured to detect phase information of the inner ring (25); and
an analyzer (34) configured to import a displacement signal, which is synchronized with a rotation phase, in the runout amount corresponding to displacement data detected by the runout amount detector (32), to thereby calculate a magnitude and a maximum phase of a runout of the outer ring (23) based on data of the displacement signal,
wherein the analyzer (34) comprises a removing unit (51) configured to remove a vibration component that is not synchronized with rotation, and
wherein the removing unit (51) comprises a drift correction processing unit (55).

2. A runout measurement device for a rolling bearing (21), the runout measurement device comprising:
a fixing stage (60) to which an outer ring (23) of a rolling bearing (21) to be measured is fixed;
a weight member (W) configured to apply a measuring load in an axial direction to an inner ring (25) of the rolling bearing (21);
a runout amount detector (62) configured to detect a radial or axial runout amount of the inner ring (25);
wherein the measuring load is applied to the inner ring (25) of the bearing (21) by the weight member (W), the inner ring (25) is rotated together with the weight member (W) under this state, and the runout amount of the inner ring (25) is detected by the runout amount detector (32);
**characterized by:**
a phase detector (63) configured to detect phase information of the inner ring (25); and
an analyzer (64) configured to import a displacement signal, which is synchronized with a rotation phase based on the phase information of the phase detector (63), in the runout amount corresponding to displacement data detected by the runout amount detector (62), to thereby calculate a magnitude and a maximum phase of a runout of the inner ring (25),
wherein the analyzer (34) comprises a removing unit (51) configured to remove a vibration component that is not synchronized with rotation, and
wherein the removing unit (51) comprises a drift correction processing unit (55).

3. The runout measurement device according to claim 1 or 2, wherein the drift correction processing unit (55) is configured to remove a drift component by calculating a first-order approximation line of data by a least squares method and subtracting the first-order approximation line from the original data.

4. The runout measurement device according to claim 1 or 2, wherein the drift correction processing unit (55) is configured to remove a drift component by calculating a straight line connecting a head and a tail of data and subtracting the straight line from the original data.

5. The runout measurement device according to claim 1 or 2, wherein the removing unit (51) of the analyzer (34) comprises a phase-compensation low-pass filter (56).

6. The runout measurement device according to claim 5, wherein the phase-compensation low-pass filter (56) comprises a Gaussian filter.

7. The runout measurement device according to any one of claims 1 to 6, wherein the analyzer (34) comprises a harmonic analysis unit (52), which is configured to perform harmonic analysis with respect to signal data obtained after removal of the vibration component that is not synchronized with the rotation, to thereby quantify an obtained first-order component phase as the maximum phase of the bearing runout.

8. The runout measurement device according to any one of claims 1 to 7, wherein the phase detector (33) comprises a slit formed in the weight member (W) as positional information, and a photoelectric sensor (42, 43) configured to detect the silt.

9. The runout measurement device according to claim 8,
wherein the photoelectric sensor (42, 43) comprises a Z-phase detection photoelectric sensor (42) and an A-phase detection photoelectric sensor (43), and
wherein the Z-phase detection photoelectric sensor (42) and the A-phase detection photoelectric sensor (43) are combined to construct a rotary encoder for phase detection.

## Patentansprüche

1. Rundlauffehler-Messvorrichtung für ein Wälzlager (21), wobei die Rundlauffehler-Messvorrichtung umfasst:
ein Befestigungsgerüst (30), an dem ein Innenring (25) eines zu messenden Wälzlagers (21) befestigt ist;
ein zum Ausüben einer Messlast in einer axialen Richtung auf einen Außenring (23) des Wälzlagers (21) ausgebildetes Gewichtselement (W);
einen zum Erfassen einer radialen oder axialen Rundlauffehlermenge des Außenrings (23) ausgebildeten Rundlauffehlermengen-Detektor (32);
wobei die Messlast auf den Außenring (23) des Lagers (21) durch das Gewichtselement (W) ausgeübt wird, der Außenring (23) zusammen mit dem Gewichtselement (W) in diesem Zustand gedreht wird und die Rundlauffehlermenge des Außenrings (23) vom Rundlauffehlermengen-Detektor (32) erfasst wird;
**gekennzeichnet durch:**
einen zum Erfassen der Phaseninformation des Innenrings (25) ausgebildeten Phasendetektor (33); und
einen zum Importieren eines Verschiebungssignals, das mit einer Drehphase synchronisiert ist, in der Rundlauffehlermenge entsprechend vom Rundlauffehlermengen-Detektor (32) erfassten Verschiebungsdaten, um dadurch eine Größe und eine Maximalphase eines Rundlauffehlers des Außenrings (23) auf der Basis von Daten des Verschiebungssignals zu berechnen, ausgebildeten Analysator (34),
wobei der Analysator (34) eine zum Entfernen einer Vibrationskomponente, die nicht mit der Drehung synchronisiert ist, ausgebildete Entfernungseinheit (51) umfasst, und
wobei die Entfernungseinheit (51) eine Driftkorrektur-Verarbeitungseinheit (55) umfasst.

2. Rundlauffehler-Messvorrichtung für ein Wälzlager (21), wobei die Rundlauffehler-Messvorrichtung umfasst:
ein Befestigungsgerüst (60), an dem ein Außenring (23) eines zu messenden Wälzlagers (21) befestigt ist;
ein zum Ausüben einer Messlast in einer axialen Richtung auf einen Innenring (25) des Wälzlagers (21) ausgebildetes Gewichtselement (W);
einen zum Erfassen einer radialen oder axialen Rundlauffehlermenge des Innenrings (25) ausgebildeten Rundlauffehlermengen-Detektor (62);
wobei die Messlast auf den Innenring (25) des Lagers (21) durch das Gewichtselement (W) ausgeübt wird, der Innenring (25) zusammen mit dem Gewichtselement (W) in diesem Zustand gedreht wird und die Rundlauffehlermenge des Innenrings (25) vom Rundlauffehlermengen-Detektor (32) erfasst wird;
**gekennzeichnet durch:**
einen zum Erfassen der Phaseninformation des Innenrings (25) ausgebildeten Phasendetektor (63); und
einen zum Importieren eines Verschiebungssignals, das mit einer Drehphase synchronisiert ist, auf der Basis der Phaseninformation des Phasendetektors (63) in der Rundlauffehlermenge entsprechend vom Rundlauffehlermengen-Detektor (62) erfassten Verschiebungsdaten, um dadurch eine Größe und eine Maximalphase eines Rundlauffehlers des Innenrings (25) zu berechnen, ausgebildeten Analysator (64),
wobei der Analysator (34) eine zum Entfernen einer Vibrationskomponente, die nicht mit der Drehung synchronisiert ist, ausgebildete Entfernungseinheit (51) umfasst, und
wobei die Entfernungseinheit (51) eine Driftkorrektur-Verarbeitungseinheit (55) umfasst.

3. Rundlauffehler-Messvorrichtung nach Anspruch 1 oder 2, wobei die Driftkorrektur-Verarbeitungseinheit (55) zum Entfernen einer Driftkomponente durch Berechnen einer Linie von Daten einer Näherung erster Ordnung durch eine Methode der kleinsten Quadrate und Subtrahieren der Linie der Näherung erster Ordnung von den ursprünglichen Daten ausgebildet ist.

4. Rundlauffehler-Messvorrichtung nach Anspruch 1 oder 2, wobei die Driftkorrektur-Verarbeitungseinheit (55) zum Entfernen einer Driftkomponente durch Berechnen einer geraden Linie zum Verbinden eines Kopfes und eines Schwanzes von Daten und Subtrahieren der geraden Linie von ursprünglichen Daten ausgebildet ist.

5. Rundlauffehler-Messvorrichtung nach Anspruch 1 oder 2, wobei die Entfernungseinheit (51) des Analysators (34) ein Phasenkompensations-Tiefpassfilter (56) umfasst.

6. Rundlauffehler-Messvorrichtung nach Anspruch 5, wobei das Phasenkompensations-Tiefpassfilter (56) ein Gauß-Filter umfasst.

7. Rundlauffehler-Messvorrichtung nach einem der Ansprüche 1 bis 6, wobei der Analysator (34) eine harmonische Analyseeinheit (52) umfasst, die zum Durchführen einer harmonischen Analyse in Bezug auf nach Entfernen der Vibrationskomponente, die nicht mit der Drehung synchronisiert ist, erhaltene Signaldaten, um dadurch eine erhaltene Komponentenphase erster Ordnung als die Maximalphase des Lager-Rundlauffehlers zu quantifizieren.

8. Rundlauffehler-Messvorrichtung nach einem der Ansprüche 1 bis 7, wobei der Phasendetektor (33) einen im Gewichtselement (W) gebildeten Schlitz als Positionsinformation und einen zum Erfassen des Schlitzes ausgebildeten fotoelektrischen Sensor (42, 43) umfasst.

9. Rundlauffehler-Messvorrichtung nach Anspruch 8,
wobei der fotoelektrische Sensor (42, 43) einen fotoelektrischen Z-Phasen-Erfassungssensor (42) und einen fotoelektrischen A-Phasen-Erfassungssensor (43) umfasst, und wobei der fotoelektrische Z-Phasen-Erfassungssensor (42) und der fotoelektrische A-Phasen-Erfassungssensor (43) kombiniert sind, um einen Drehgeber zur Phasenerfassung zu konstruieren.

## Revendications

1. Dispositif de mesure de battement pour un roulement (21), le dispositif de mesure de battement comprenant :
un support de fixation (30) auquel une bague intérieure (25) d'un roulement (21) à mesurer est fixée ;
un élément de masse (W) configuré pour appliquer une charge de mesure dans une direction axiale à une bague extérieure (23) du roulement (21) ;
un détecteur de quantité de battement (32) configuré pour détecter une quantité de battement radial ou axial de la bague extérieure (23) ;
dans lequel la charge de mesure est appliquée à la bague extérieure (23) du roulement (21) par l'élément de masse (W), la bague extérieure (23) est tournée avec l'élément de masse (W) dans cet état, et la quantité de battement de la bague extérieure (23) est détectée par le détecteur de quantité de battement (32) ;
**caractérisé par** :
un détecteur de phase (33) configuré pour détecter des informations de phase de la bague intérieure (25) ; et
un analyseur (34) configuré pour importer un signal de déplacement, qui est synchronisé avec une phase de rotation, dans la quantité de battement correspondant à des données de déplacement détectées par le détecteur de quantité de déplacement (32), pour ainsi calculer une amplitude et une phase maximale d'un battement de la bague extérieure (23) selon des données du signal de déplacement,
dans lequel l'analyseur (34) comprend une unité de suppression (51) configurée pour supprimer un composant de vibration qui n'est pas synchronisé avec une rotation, et
dans lequel l'unité de suppression (51) comprend une unité de correction de traitement de dérive (55).

2. Dispositif de mesure de battement pour un roulement (21), le dispositif de mesure de battement comprenant :
un support de fixation (60) auquel une bague extérieure (23) d'un roulement (21) à mesurer est fixée ;
un élément de masse (W) configuré pour appliquer une charge de mesure dans une direction axiale à une bague intérieure (25) du roulement (21) ;
un détecteur de quantité de battement (62) configuré pour détecter une quantité de battement radial ou axial de la bague intérieure (25) ;
dans lequel la charge de mesure est appliquée à la bague intérieure (25) du roulement (21) par l'élément de masse (W), la bague intérieure (25) est tournée avec l'élément de masse (W) dans cet état et la quantité de battement de la bague intérieure (25) est détectée par le détecteur de quantité de battement (32) ;
**caractérisé par** :
un détecteur de phase (63) configuré pour détecter des informations de phase de la bague intérieure (25) ; et
un analyseur (64) configuré pour importer un signal de déplacement, qui est synchronisé avec une phase de rotation selon les informations de phase du détecteur de phase (63), dans la quantité de battement correspondant à des données de déplacement détectées par le détecteur de quantité de déplacement (62), pour ainsi calculer une amplitude et une phase maximale d'un battement de la bague intérieure (25),
dans lequel l'analyseur (34) comprend une unité de suppression (51) configurée pour supprimer un composant de vibration qui n'est pas synchronisé avec une rotation, et
dans lequel l'unité de suppression (51) comprend une unité de correction de traitement de dérive (55).

3. Le dispositif de mesure de battement selon la revendication 1 ou 2, dans lequel l'unité de traitement de correction de dérive (55) est configurée pour supprimer une composante de dérive en calculant une ligne d'approximation du premier ordre de données par une méthode des moindres carrés et en soustrayant la ligne d'approximation du premier ordre des données d'origine.

4. Le dispositif de mesure de battement selon la revendication 1 ou 2, dans lequel l'unité de traitement de correction de dérive (55) est configurée pour supprimer une composante de dérive en calculant une ligne droite reliant une tête et une queue de données et en soustrayant la ligne droite des données d'origine.

5. Le dispositif de mesure de battement selon la revendication 1 ou 2, dans lequel l'unité de suppression (51) de l'analyseur (34) comprend un filtre passe-bas de compensation de phase (56).

6. Le dispositif de mesure de battement selon la revendication 5, dans lequel le filtre passe-bas de compensation de phase (56) comprend un filtre gaussien.

7. Le dispositif de mesure de battement selon l'une quelconque des revendications 1 à 6, dans lequel l'analyseur (34) comprend une unité d'analyse d'harmonique (52), qui est configurée pour effectuer une analyse d'harmonique par rapport à des données de signal obtenues après suppression de la composante de vibration qui n'est pas synchronisée avec la rotation, pour ainsi quantifier une phase de composante du premier ordre obtenue en tant que phase maximale du battement de roulement.

8. Le dispositif de mesure de battement selon l'une quelconque des revendications 1 à 7, dans lequel le détecteur de phase (33) comprend une fente constituée dans l'élément de masse (W) en tant qu'information positionnelle et un capteur photoélectrique (42, 43) configuré pour détecter la fente.

9. Le dispositif de mesure de battement selon la revendication 8,
dans lequel le capteur photoélectrique (42, 43) comprend un capteur photoélectrique de détection de phase Z (42) et un capteur photoélectrique de détection de phase A (43), et
dans lequel le capteur photoélectrique de détection de phase Z (42) et le capteur photoélectrique de détection de phase A (43) sont combinés pour constituer un encodeur rotatif pour détection de phase.
